# EUROPÄISCHE PATENTSCHRIFT

(11) **EP 3 404 281 B1**
(45) Veröffentlichungstag und Bekanntmachung des Hinweises auf die Patenterteilung: **22.01.2020**
(21) Anmeldenummer: 18167886.3
(22) Anmeldetag: 18.04.2018
(51) Int. Cl.: F16D 55/224, F16D 59/02

(54) **VORRICHTUNG ZUM BETÄTIGEN EINER MECHANISCHEN EINRICHTUNG, INSBESONDERE EINER BREMSEINRICHTUNG**
DEVICE FOR ACTUATING A MECHANICAL DEVICE, IN PARTICULAR A BRAKING DEVICE
DISPOSITIF DE FONCTIONNEMENT D'UN DISPOSITIF MÉCANIQUE, EN PARTICULIER D'UN DISPOSITIF DE FREINAGE

(30) Priorität: 19.05.2017 DE 102017110985
(43) Veröffentlichungstag der Anmeldung: 21.11.2018
(73) Patentinhaber: Tüschen & Zimmermann GmbH & Co. KG, 57368 Lennestadt-Saalhausen (DE)
(72) Erfinder: Tüschen, Ludger, 57368 Lennestadt (DE)
(74) Vertreter: Cohausz & Florack

(56) Entgegenhaltungen:
- EP-A2- 2 669 543
- WO-A1-2009/129764
- DE-A1-102005 059 590
- DE-A1-102010 023 700
- FR-A1- 2 278 987

## Beschreibung

Die Erfindung betrifft eine Vorrichtung zum Betätigen einer mechanischen Bremseinrichtung, mit einem aus einer Bremsstellung in eine Lüftstellung und umgekehrt bewegbaren Stellmechanismus, einem Elektromotor zum Bewegen des Stellmechanismus aus der Bremsstellung in die Lüftstellung, und mit einer mit dem Stelmechanismus verbundenen Spannvorrichtung, die beim Bewegen des Stellmechanismus aus der Bremsstellung in die Lüftstellung gespannt wird, wobei der Stellmechanismus mit einem Zahnstangentrieb versehen ist, der mit einem durch den Elektromotor angetriebenen Antriebsritzel kämmt, und wobei der Elektromotor sein Drehmoment über eine als Freilaufkupplung ausgeführte Kupplung auf das Antriebsritzel überträgt.

Durch einen zuvor genannten Stellmechanismus können beispielsweise im Wesentlichen lineare Bewegungen zum Verstellen, zum Heben, zum Drücken oder zum Spreizen ausgeführt werden. Dabei ist lediglich von Relevanz, dass die zu betätigende mechanische Bremseinrichtung über unterschiedliche Stellungen verfügt, nämlich eine Bremsstellung und eine Lüftstellung.

Eine solche Bremseinrichtung dient beispielsweise dem sicheren Stillsetzen und dem Halten von Antriebssträngen, insbesondere von drehenden Maschinenteilen. Sie kann zum Beispiel an Kettenförderern oder Bandförderern eingesetzt werden, mit denen in Bergbau- und anderen Industriebetrieben Schüttgut, wie Kohle, Erz oder Gestein, über lange Transportwege gefördert wird. Bei einer Störung der Antriebe oder bei einer gewollt eingeleiteten Betriebsunterbrechung stellen solche Bremseinrichtungen sicher, dass das Förderband oder die Förderketten mit dem darauf liegenden Fördergut zum Stillstand gebracht und gehalten wird, bis der Betrieb wieder aufgenommen wird.

Elektromechanische Bremsen an sich sind aus dem Stand der Technik bekannt. Eine Bremsvorrichtung der oben genannten Art ist in der EP 2 669 543 A2 offenbart. Bei der bekannten Bremsvorrichtung ist ein Elektromotor ebenfalls über eine Freilaufkupplung mit einem Antriebsritzel verbunden, wobei das Antriebsritzel mit einer Zahnstange eines Stellelements der Bremsvorrichtung kämmt. Über die Verbindung des Antriebsritzels mit der Zahnstange wird die von dem Elektromotor erzeugte rotatorische Bewegung der Motorwelle bzw. des Antriebsritzels in eine translatorische Bewegung der Zahnstange umgewandelt. In der Praxis erweist sich eine solche Ausgestaltung jedoch mitunter bei Bremsen mit hoher Bremsleistung als verbesserungsbedürftig, insbesondere dann, wenn die translatorische Bewegung der Zahnstange auf zwei oder mehr Bremsbacken übertragen werden soll. Des Weiteren ist die Kraftwirkung einer mit einem solchen Getriebe gekoppelten Bremszange exzentrisch, was in manchen Anwendungen als nicht zufriedenstellend erachtet wird.

Die DE 10 2010 023 700 A1 offenbart eine Stellvorrichtung für eine selbstverstärkende Bremseinrichtung. Die Stellvorrichtung umfasst eine Anstelleinrichtung zum Verstellen eines Bremskopfes aus seiner Lüftstellung in seine Bremsstellung, eine lösbare Halteeinrichtung, mit der der Bremskopf in seiner Bremsstellung fixierbar ist, eine Spanneinrichtung, welche auf einen senkrecht zu einer Wirkfläche eines Bremselements wirkenden Bremskörper eine Bremskraft aufbaut, wenn der Bremskopf seine Bremsstellung einnimmt, und ein an den Bremskörper gekoppeltes Stellstück, das unter Wirkung des Bremselements über den Bremskörper auf die Spanneinrichtung wirkt, wobei Anstelleinrichtung, Halteeinrichtung und Spanneinrichtung an einem auf den Bremskopf wirkenden Übertragungselement angreifen. Die Halteeinrichtung kann dabei ein mit dem Übertragungselement gekoppeltes, als Zahnrad ausgebildetes Sperrelement aufweisen, welches an einer Zahnstange angreift und mittels einer mit dem Zahnrad zusammenwirkenden und mit einem Freilauf gekoppelten Kupplung in Bremsrichtung frei beweglich und in Lüftrichtung festlegbar ist. Des Weiteren kann die Stellvorrichtung ein Lüftgerät umfassen, welches über eine Spindel und einen Schrittmotor in einem Gehäuserahmen in Lüftrichtung bzw. in Bremsrichtung verschiebbar ist. Am vorderen Ende des Lüftgerätes ist eine als Elektrohaftmagnet ausgebildete Schaltkupplung angeordnet, die magnetisch mit einem Schlitten linear koppelbar ist und bei gelöster Halteeinrichtung in Lüftrichtung die Schubstange gegen die Kraft einer Anstellfeder verstellen kann. Ferner ist eine Zentriereinrichtung vorgesehen, deren Gehäuse zwischen sich gegenüberliegenden Verbindungsplatten inmitten einer Bremshebelanordnung positioniert ist. Über hervorstehende Seitenbereiche der Verbindungsplatten werden die Verbindungsplatten samt Zentriereinrichtung an den Bremshebeln befestigt. Langlöcher ermöglichen eine Positionierung der Zentriereinrichtung in Bezug auf eine Bremsscheibe. Das Gehäuse der Zentriereinrichtung dient der Führung zweier Zahnstangen. Auf gleicher Längsachse liegen parallel zu den Zahnstangen zwei Koppelstangen, die jeweils mit einer Zahnstange fest verbunden sind. Die Koppelstangen greifen mit ihren äußeren Enden in je einen Bremshebel ein. Im Zentrum des Gehäuses befindet sich eine Aufnahme für ein darin drehbar gelagertes Zahnrad, dessen Drehachse die Achse der Koppelstangen schneidet und in dessen Zähne die Zahnstangen eingreifen.

Die FR 2 278 987 A offenbart einen Entkupplungsmechanismus für ein wahlweise von einem Primär- oder einem Sekundärantrieb angetriebenes Lastelement, insbesondere für Ventil-Betätigungseinrichtungen. Der Entkupplungsmechanismus umfasst eine den Primärantrieb normalerweise mit dem Lastelement verbindende Kupplung, eine von Hand aus einer Normal- in ein Umschaltlage umschaltbare Entkupplungseinrichtung und Einrichtungen, einschließlich der genannten Kupplung und der Entkupplungseinrichtung in Normalstellung, durch die normalerweise der Sekundärantrieb von dem Lastelement abgekuppelt ist. Die Entkupplungseinrichtung verbindet bei ihrer Umschaltung den Sekundärantrieb mit dem Lastelement nur dann, wenn der Primärantrieb unwirksam ist. Bei Wieder-Wirksamwerden des Primärantriebs kuppelt die Entkupplungseinrichtung automatisch den Sekundärantrieb ab und den Primärantrieb an.

Die DE 10 2005 059 590 A1 offenbart eine Trommelbremse mit zwei Bremsbacken, die mittels einer elektromechanischen Betätigungseinrichtung gegen eine Bremstrommel drückbar sind. Die Betätigungseinrichtung weist ein drehend antreibbares Zahnrad und zwei Zahnstangen auf, die auf gegenüber liegenden Seiten mit dem Zahnrad kämmen und von denen jede mit einer der beiden Bremsbacken gekoppelt ist. Zum drehenden Antrieb des Zahnrads weist die Trommelbremse einen Elektromotor auf. Um die Bremsbacken nach außen gegen die Bremstrommel zu drücken, sind Betätigungshebel vorgesehen, die an einem Ende schwenkbar an einer Trägerplatte der Trommelbremse gelagert sind. Die anderen Enden der Betätigungshebel sind mit jeweils einer der Zahnstangen schwenkbar verbunden. Des Weiteren ist ein Federelement in Form einer Schraubenzugfeder vorgesehen, die in die beiden Betätigungshebel eingehängt ist und diese nach innen zieht.

Die WO 2009/129764 A1 offenbart eine elektrisch regelbare Scheibenbremse mit einem schwimmend gelagerten Bremssattel, mit zumindest einer Bremsscheibe, deren nach außen gerichtete Seitenflächen mit je einem Reibbelag (Bremsbelag) zusammenwirken, und mit einer elektrischen Betätigungseinheit zum Aufbringen einer auf die Reibbeläge wirkenden Kraft, wobei einer der Reibbeläge durch die Betätigungseinheit direkt und der andere Reibbelag durch die Wirkung einer vom Bremssattel aufgebrachten Reaktionskraft mit der zugeordneten Fläche der Bremsscheibe in Eingriff bringbar ist.

Der vorliegenden Erfindung liegt die Aufgabe zugrunde, eine Vorrichtung der eingangs genannten Art zur Verfügung zu stellen, die hinsichtlich ihrer Einsatzmöglichkeiten und Funktion bei günstiger Herstellung deutlich erweitert und verbessert ist.

Diese Aufgabe wird durch eine Vorrichtung mit den in Anspruch 1 angegebenen Merkmalen gelöst. Bevorzugte und vorteilhafte Ausgestaltungen der erfindungsgemäßen Vorrichtung sind in den Unteransprüchen angegeben.

Die erfindungsgemäße Vorrichtung ist dadurch gekennzeichnet, dass der Zahnstangentrieb gegensinnig wirkende Zahnstangen aufweist, die mit Kolben und/oder Gestängen des Stellmechanismus gekoppelt sind.

Die erfindungsgemäße Vorrichtung ist insbesondere zum Betätigen von mechanischen Bremseinrichtungen von Vorteil, bei welchen synchron zwei oder mehrere translatorische Bewegungen ausgeführt werden sollen, die die mechanische Einrichtung und/oder die Betätigungsvorrichtung hierzu aber gleichwohl kompakt ausgebildet sein soll. Denn die erfindungsgemäße Ausgestaltung ermöglicht einen gegensinnigen, synchronen Hub von zwei Kolben bzw. Gestängen. Dies kann beispielsweise zum Betätigen von Tandembremsen oder ähnlichen Bremseinrichtungen genutzt werden. So kann beispielsweise bei einer diametral gegenüberliegenden Anordnung zweier Bremszangen oder Bremsbacken am Umfang einer Bremsscheibe bzw. Bremstrommel eine Verdopplung des Bremsmoments bei Vermeidung einer exzentrischen Krafteinwirkung erzielt werden. Die Ausführung der erfindungsgemäßen Betätigungsvorrichtung entspricht einer Tandemausführung. Sie kann auch als elektromechanischer Betätiger in Tandem-Ausführung oder als Tandembetätiger bezeichnet werden.

Mittels der als Freilaufkupplung ausgeführten Kupplung wird verhindert, dass beim raschen bzw. schlagartigen Rückstellen der mechanischen Einrichtung aus einer Lüftstellung in eine Bremsstellung die beschleunigten Massen bei hartem Anschlag keine Schäden verursachen können. Eine rasche bzw. schlagartige Bewegung des Stellmechanismus aus einer Lüftstellung in eine Bremsstellung wird in manchen Fällen beispielsweise durch einen harten Anschlag der mechanischen Einrichtung, etwa durch das Auftreffen von Bremsbelägen auf eine Bremsscheibe oder Bremstrommel, abrupt gestoppt. In solchen Fällen verhindert die Freilaufkupplung eine schädigende Belastung bzw. Beschädigung von allen der Freilaufkupplung vorgelagerten Komponenten, insbesondere des Elektromotors. Durch die Freilaufkupplung können somit Bremsmomentspitzen sowie eine schädliche Belastung der Antriebsteile verhindert werden.

Erfindungsgemäß ist der Stellmechanismus mit einer Spannvorrichtung verbunden, die beim Bewegen des Stellmechanismus aus der Bremsstellung in die Lüftstellung gespannt wird. Durch Spannen der mechanischen Einrichtung beim Bewegen des Stellmechanismus in die Lüftstellung wird ermöglicht, dass sich der Stellmechanismus bei einem Stromausfall zurück in die Bremsstellung bewegt. Dieses Verhalten wird als "Fail-Safe-Verhalten" bezeichnet.

Vorzugsweise ist die Spannvorrichtung aus federelastischen Rückstellelementen, beispielsweise aus Druckfedern oder Luftfedern gebildet. Durch die Kombination von zwei oder mehreren Rückstellelementen lässt sich eine ausreichende Rückstellkraft mit relativ kleinem Feder- bzw. Stellweg und damit eine besonders kompakte Bauweise der Spannvorrichtung bzw. der erfindungsgemäßen Vorrichtung erzielen. Die Druckfedern sind vorzugsweise in Form eines Federpakets ausgebildet.

Anstelle eines Federpakets kann die Spannvorrichtung auch mindestens einen Luftspeicher bzw. eine Luftfeder als Federelement aufweisen. Ferner ist es vorteilhaft, wenn die Spannvorrichtung alternativ mit einer Vorspanneinrichtung versehen ist. Hierdurch bietet die erfindungsgemäße Vorrichtung die Möglichkeit, die Bremskraft bedarfsgerecht einstellen zu können.

Nach einer weiteren bevorzugten Ausgestaltung der erfindungsgemäßen Vorrichtung sind die gegensinnig wirkenden Zahnstangen mit gelenkig gelagerten Gestängen und/oder Hebeln derart gekoppelt, dass eine axiale gegensinnige Bewegung der Zahnstangen mittels der gelenkig gelagerten Gestänge und/oder Hebel krafterhöhend auf die Spannvorrichtung zum Spannen der Rückstellelemente übertragbar ist. Durch diese Ausgestaltung wird auf relativ einfache Weise ein leichtgängiges, kraftreduziertes Spannen der Rückstellelemente ermöglicht.

Eine weitere bevorzugte Ausgestaltung der erfindungsgemäßen Vorrichtung ist dadurch gekennzeichnet, dass eine vom Elektromotor angetriebene Antriebswelle mit einer Halteeinrichtung versehen ist, mittels welcher eine Bewegung des Stellmechanismus aus der Lüftstellung in die Bremsstellung sperrbar ist. Die Halteeinrichtung stellt in zuverlässiger Weise ein Halten des Stellmechanismus in einer Lüftstellung sicher. Diese Ausgestaltung ist insbesondere in Kombination mit der zuvor genannten Spannvorrichtung von Vorteil.

Bevorzugt umfasst die Halteeinrichtung ein mit der Antriebswelle drehfest verbundenes Ritzel, eine dem Ritzel zugeordnete federbelastete Rastklinke und einen die Rastklinke gegen die Kraft eines Federelements betätigenden Elektromagneten, wobei die Rastklinke im stromlosen Zustand des Elektromagneten durch das Federelement in eine das Ritzel entsperrende Stellung bewegt wird. Hierdurch wird ein Halten bzw. Offenhalten des Stellmechanismus ohne den Einsatz jeglicher Hydraulik ermöglicht. Die mit einer Hydraulik üblicherweise verbundenen Dicht- oder Alterungsprobleme können auf diese Weise vollständig vermieden werden. Der Elektromagnet benötigt zur Erfüllung der Haltefunktion lediglich eine geringe Leistung. Aufgrund dieser sehr niedrigen Leistungsaufnahme erwärmt sich die Halteeinrichtung in der oben angegebenen, bevorzugten Ausgestaltung nur geringfügig und benötigt somit keine aufwendige Kühlung.

Alternativ kann die Halteeinrichtung aber auch durch einen hydraulischen Hilfszylinder mit elektrisch steuerbarem Ventil oder durch die Ausbildung des Elektromotors als Torquemotor oder Stillstandmotor (auch Drehfeldmagnet genannt) ausgeführt werden.

Nach einer weiteren bevorzugten Ausgestaltung der Erfindung ist die oder eine vom Elektromotor angetriebene Antriebswelle mit einem manuell betätigbaren Hilfsantrieb versehen, mittels welchem der Stellmechanismus bei stromlosem Elektromotor manuell aus der Bremsstellung in die Lüftstellung bewegbar ist. Mittels eines solchen Hilfsantriebs kann die erfindungsgemäße Vorrichtung ohne Betrieb des Elektromotors in eine Lüftstellung bewegt werden, so dass die zu betätigende mechanische Einrichtung gefahrlos eingebaut, eingerichtet, ausgebaut und gewechselt werden kann. Im Falle der Ausgestaltung der zu betätigenden mechanischen Einrichtung als Bremseinrichtung können auf diese Weise beispielsweise Bremsbeläge oder Bremsscheibe komfortabel gewechselt werden. Bevorzugt ist der manuell betätigbare Hilfsantrieb bei laufendem Elektromotor nicht funktionsfähig bzw. von der Antriebswelle entkoppelt.

Bevorzugt weist der Hilfsantrieb eine axial verschiebbar gelagerte Gewindeschnecke auf, die mit einer Rückstellfeder versehen ist und an einem Ende einen mit einem Werkzeug form- und/oder kraftschlüssig greifbaren Abschnitt aufweist, wobei die Gewindeschnecke in Eingriff mit einem mit der Antriebswelle drehfest verbundenen Motorritzel bringbar ist und bei einem Start des Elektromotors automatisch außer Eingriff mit dem Motorritzel gelangt. Hierdurch kann die Gewindeschnecke des Hilfsantriebs in zuverlässiger und leichtgängiger Weise mittels eines Werkzeugs in Eingriff mit einem Motorritzel gebracht werden und der Stellmechanismus manuell von einer Bremsstellung in eine Lüftstellung bewegt werden. Durch die Rückstellfeder wird sichergestellt, dass bei gewolltem oder unbeabsichtigtem Einschalten des Elektromotors die Gewindeschnecke automatisch gefahrlos von dem Motorritzel entkoppelt wird.

Nach einer weiteren bevorzugten Ausgestaltung ist die erfindungsgemäße Vorrichtung Bestandteil einer oder der (zuvor genannten) Bremseinrichtung. Insbesondere elektromechanische Bremsen erfordern in der Praxis häufig ein "Fail-Safe Verhalten", so dass bei einem Stromausfall oder einem Ausfall des Elektromotors der Bremse die zugeordnete Transport- oder Fördervorrichtung zuverlässig solange stillgesetzt wird bis der Stromausfall bzw. Motorfehler behoben ist.

Vorzugsweise sind die Rückstellelemente der Spannvorrichtung bei einer solchen Ausführung der erfindungsgemäßen Vorrichtung nicht unmittelbar im Bereich des Zahnstangentriebes, sondern im Bereich der Bremseinrichtung bzw. der zu betätigenden mechanischen Einrichtung angeordnet. Weiter bevorzugt weist die Bremseinrichtung einen Bremssattel oder eine Bremszange auf, an welchem die Spannvorrichtung angeordnet ist. Die erfindungsgemäße Vorrichtung zum Betätigen der Bremseinrichtung kann somit über große Hubwege mit entsprechenden Übersetzungsverhältnissen hohe Kräfte ausüben. Vorzugsweise ist der Weg der federelastischen Rückstellelemente der Spannvorrichtung sehr gering, so dass sich der Bremsbelagsverschleiß der Bremseinrichtung nur wenig oder geringstmöglich auf die Veränderung der Bremskraft der Bremseinrichtung auswirkt. Hierdurch kann eine aufwändige und teure Bremsbelagsverschleißkompensation entfallen.

Eine weitere bevorzugte Ausgestaltung der Erfindung ist dadurch gekennzeichnet, dass der Elektromotor über ein Winkelgetriebe, vorzugsweise ein Winkelplanetengetriebe, mit dem mit den Zahnstangen kämmenden Antriebsritzel verbunden ist. Hierdurch wird eine besonders kompakte Bauweise der erfindungsgemäßen Vorrichtung ermöglicht. Diese Kompaktheit kann durch den Einsatz eines Winkelplanetengetriebes optimiert werden.

Nach einer weiteren Ausgestaltung der erfindungsgemäßen Vorrichtung ist die Freilaufkupplung zwischen dem Winkelgetriebe und dem Antriebsritzel angeordnet. Durch diese Ausgestaltung können alle dem Antriebsritzel in Kraftflussrichtung vorgeordneten Antriebselemente der erfindungsgemäßen Vorrichtung vor einer unzulässigen Belastung bei einem raschen Zurückstellen der zu betätigenden mechanischen Bremseinrichtung in die Bremsstellung vor einer unzulässigen Belastung geschützt werden.

Nachfolgend wird die Erfindung anhand einer mehrere Ausführungsbeispiele darstellenden Zeichnung näher erläutert. Es zeigen:
- Fig. 1: eine Vorrichtung zum Betätigen einer mechanischen Bremseinrichtung in einer perspektivischen Ansicht;
- Fig. 2: eine Draufsicht auf die Vorrichtung aus Fig. 1;
- Fig. 3: eine Schnittansicht der Vorrichtung aus Fig. 1 entlang der Schnittlinie III-III in Fig. 2;
- Fig. 4: eine weitere Schnittansicht der Vorrichtung aus Fig. 1 entlang der Schnittlinie IV-IV in Fig. 2;
- Fig. 5a und 5b: weitere Schnittansichten der Vorrichtung entlang der Schnittlinie Va-Va/Vb-Vb in Fig. 2 im Motorbetrieb, ohne Handkurbel bzw. im Handbetrieb mit Handkurbel;
- Fig. 6: ein erstes Ausführungsbeispiel der erfindungsgemäßen Vorrichtung mit einer Scheibenbremse in einer Draufsicht;
- Fig. 7: eine Schnittansicht der Vorrichtung aus Fig. 6 entlang der Schnittlinie VII-VII in Fig. 6;
- Fig. 8: eine Schnittansicht der Vorrichtung aus Fig. 6 entlang der Schnittlinie VIII-VIII in Fig. 6;
- Fig. 9 und Fig. 10: eine Seitenansicht und eine Schnittansicht eines zweiten Ausführungsbeispiels der erfindungsgemäßen Vorrichtung mit einer Gestängebremse; und
- Fig. 11 und Fig. 12: eine Seitenansicht und eine Schnittansicht eines dritten Ausführungsbeispiels der erfindungsgemäßen Vorrichtung mit einer Gestängebremse.

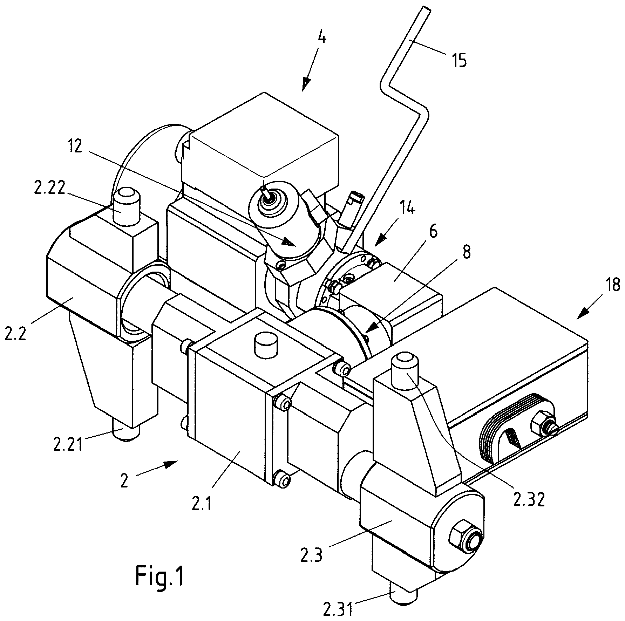

In den Figuren 1 bis 5 ist eine Vorrichtung zum Betätigen einer mechanischen Bremseinrichtung dargestellt. Die Vorrichtung umfasst einen aus einer Bremsstellung in eine Lüftstellung und umgekehrt bewegbaren Stellmechanismus 2 und einen Elektromotor 4 zum Bewegen des Stellmechanismus 2 aus der Bremsstellung in die Lüftstellung. Der Elektromotor 4 ist dabei über ein Getriebe 6, vorzugsweise ein Winkelgetriebe, und eine Freilaufkupplung 8 mit dem Stellmechanismus 2 verbunden. Das Getriebe 6 ist beispielsweise als Winkelplanetengetriebe ausgestaltet.

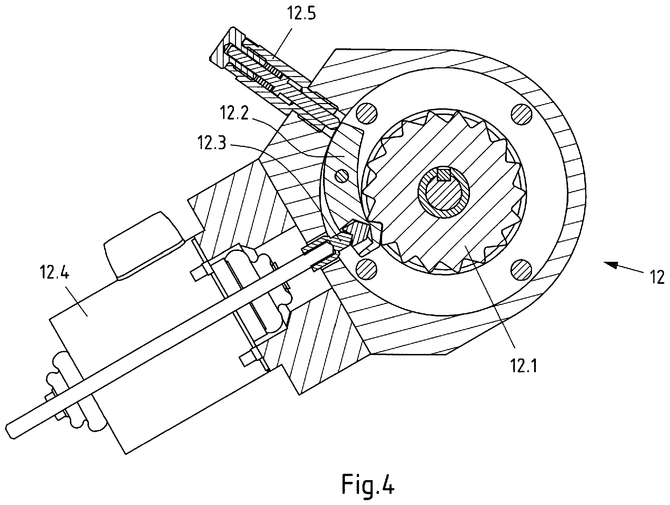

Der von dem Elektromotor 4 angetriebenen Motor- oder Antriebswelle 10 ist eine Halteeinrichtung 12 zugeordnet, mittels welcher eine Bewegung des Stellmechanismus 2 aus der Lüftstellung in die Bremsstellung sperrbar ist. Die Funktionsweise und eine bevorzugte Konstruktion der Halteeinrichtung 12 lässt sich der Fig. 4 entnehmen.

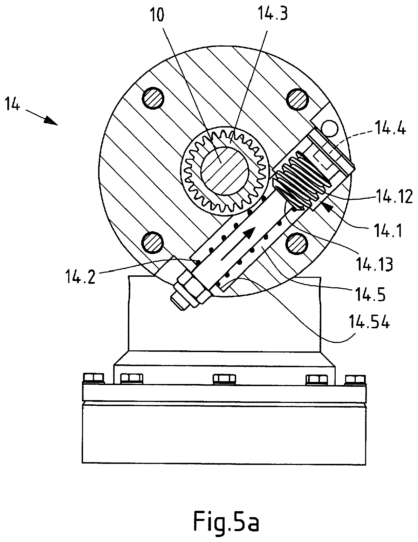

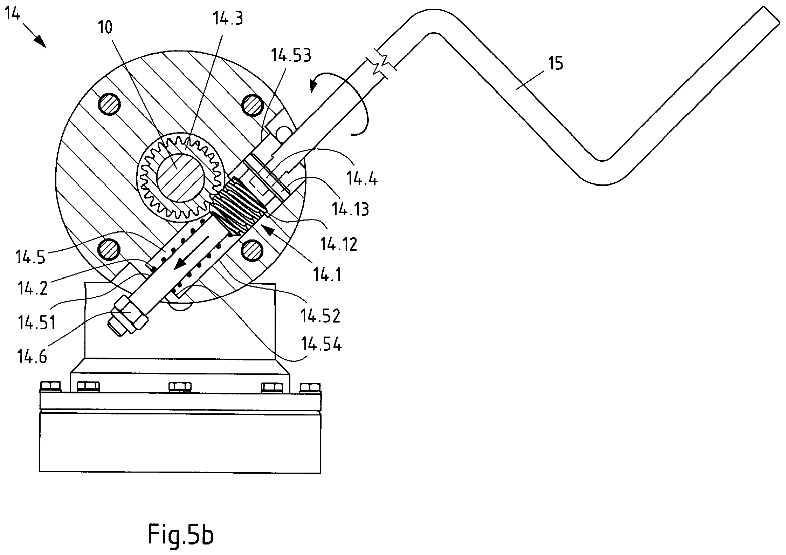

Neben der Halteeinrichtung 12 ist ein Hilfsantrieb 14 angeordnet, mittels dem der Stellmechanismus 2 bei stromlosem Elektromotor 4 manuell aus der Bremsstellung in die Lüftstellung bewegbar ist (vgl. Fig. 5a und 5b). Die Betätigung des Hilfsantriebes 14 erfolgt vorzugweise mittels eines Werkzeugs 15, das beispielsweise in Form einer Handkurbel ausgeführt ist. Die Funktionsweise des Hilfsantriebes 14 wird weiter unten mit Bezug auf die Figuren 5a und 5b erläutert.

Der Stellmechanismus 2 ist über die Freilaufkupplung 8 und das Getriebe 6 mit der Antriebswelle (Motorwelle) 10 des Elektromotors 4 verbunden. An dem Stellmechanismus 2 ist ein Steuerungskasten 18 zur Steuerung des Elektromotors 4 angeordnet. Die Halteeinrichtung 12 kann beispielsweise mittels eines elektrisch steuerbaren Ventils gesteuert werden. In diesem Fall ist der Steuerungskasten 18 zusätzlich mit der Halteeinrichtung 12 bzw. dem elektrisch steuerbaren Ventil der Halteeinrichtung 12 verbunden.

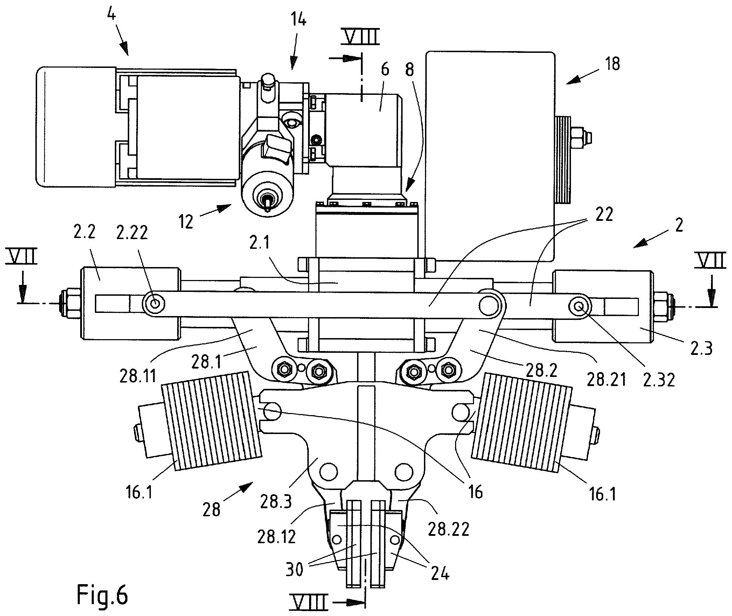

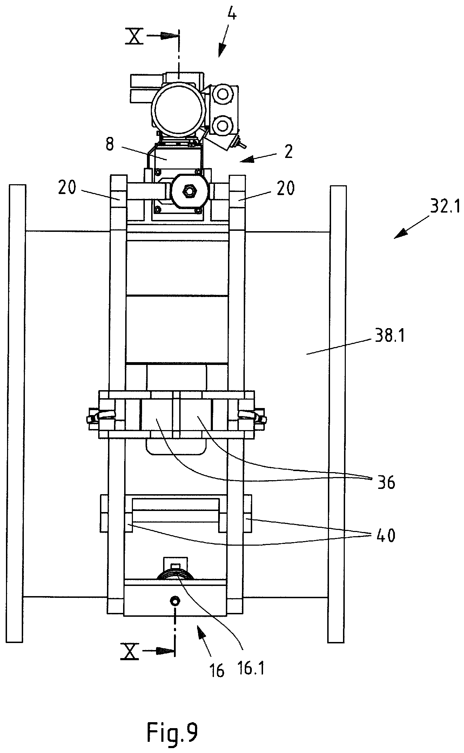

Der Stellmechanismus 2 weist ein Grundgehäuse 2.1 sowie zwei daran beweglich gelagerte Gehäuseteile 2.2 und 2.3 auf. Die Gehäuseteile 2.2, 2.3 können auch als Stellkörper bezeichnet werden. Sie sind relativ zu dem Grundgehäuse 2.1 bewegbar. In dem in den Figuren 1 bis 3 dargestellten Ausführungsbeispiel sind die beiden Gehäuseteile 2.2, 2.3 gegensinnig zueinander bewegbar. An den Gehäuseteilen 2.2, 2.3 sind jeweils zwei einander gegenüberliegende Gelenkzapfen 2.21 und 2.22 sowie 2.31 und 2.32 angeordnet, an welchen Gestänge 20 (vgl. weitere Ausführungsbeispiele in Fig. 9 und 10 sowie Fig. 11 und 12) oder Hebel gelenkig angebracht werden können. Die Gelenkzapfen 2.21, 2.22, 2.31 und 2.32 können beispielsweise die Schwenkachse für Gestänge 20 von Bremsen bilden. Alternativ können die Gelenkzapfen 2.21, 2.22, 2.31 und 2.32 mit Zugleisten 22 zur Betätigung von Bremsbacken 24 verbunden werden (vgl. weiteres Ausführungsbeispiel in den Figuren 6 bis 8).

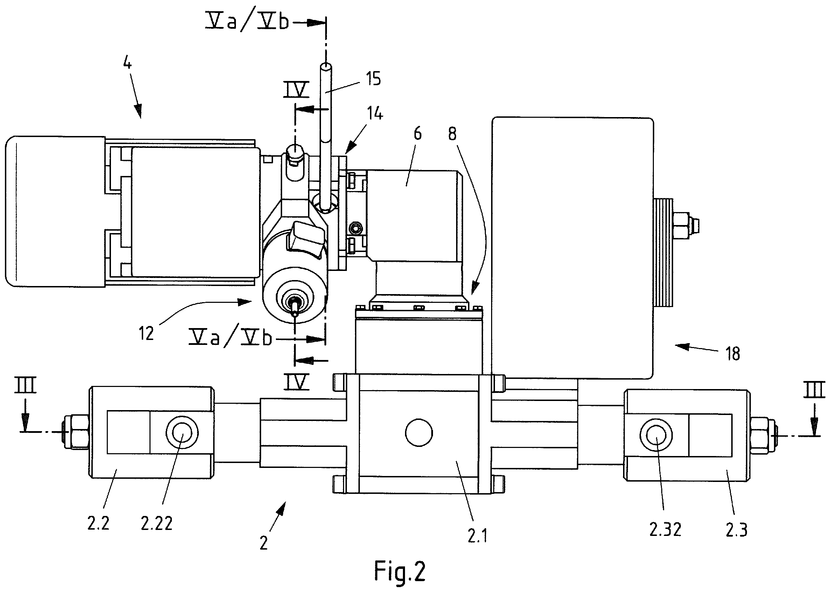

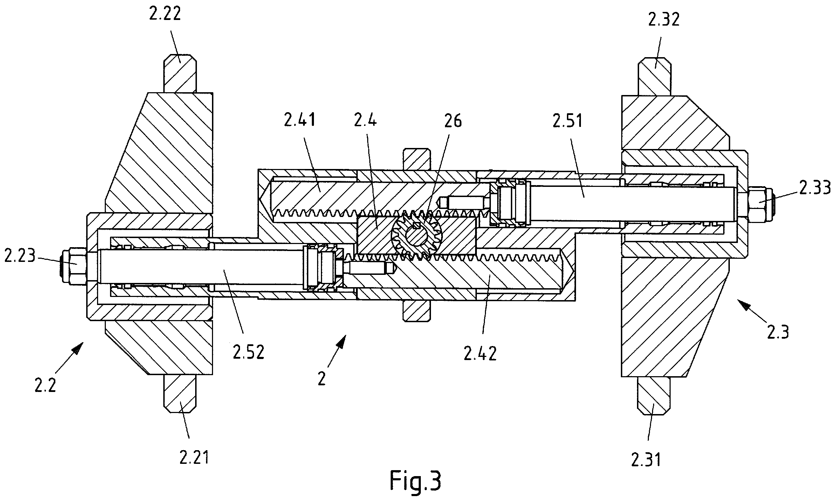

Fig. 2 zeigt eine Draufsicht auf die Vorrichtung aus Fig. 1. Die in Fig. 2 durch die Schnittlinien III-III, IV-IV und Va-Va/Vb-Vb bezeichneten Schnittansichten werden nachfolgend anhand der Figuren 3, 4, 5a und 5b beschrieben.

In der Schnittansicht gemäß Fig. 3 sind der Stellmechanismus 2 und ein Zahnstangentrieb 2.4 des Stellmechanismus 2 besonders gut zu erkennen. Der Zahnstangentrieb 2.4 setzt sich aus zwei gegensinnig wirkenden Zahnstangen 2.41 und 2.42 zusammen, wobei die beiden Zahnstangen 2.41, 2.42 mit einem durch den Elektromotor 4 angetriebenen Antriebsritzel 26 kämmen. Die Zahnstangen 2.41, 2.42 sind in dem Grundgehäuse 2.1 parallel zueinander verschiebbar gelagert. An die Zahnstangen 2.41, 2.42 schließen sich axial stangen- oder bolzenförmige Stellglieder 2.51, 2.52 des Stellmechanismus 2 an, wobei die beiden Stellglieder 2.51, 2.52 über Schraubverbindungen an einem ihrer Enden mit den Zahnstangen 2.41, 2.42 und an ihren anderen Enden mit den Gehäuseteilen 2.2, 2.3verbunden sind. Die Zahnstangen 2.41, 2.42 weisen hierzu jeweils eine Gewindebohrung auf, deren Längsachse parallel zur Längsachse der Zahnstange 2.41 bzw. 2.42 verläuft. In die jeweilige Gewindebohrung ist ein Schraubbolzen eingedreht, dessen Gewinde oder Kopf mit einem der Stellglieder 2.51 bzw. 2.52 form- und/oder kraftschlüssig verbunden ist. Die Gehäuseteile 2.2, 2.3 sind an den den Zahnstangen 2.41, 2.42 abgewandten Enden der Stellglieder 2.51 bzw. 2.52 lösbar befestigt. Das jeweilige Stellglieder 2.51, 2.52 ist dort jeweils mit einer bolzenförmigen Endabschnitt und einem Absatz zur Aufnahme und axialen Festlegung des Gehäuseteils 2.2, 2.3 versehen, wobei der bolzenförmige Endabschnitt ein Außengewinde zum Aufschrauben einer Mutter 2.23, 2.33 aufweist. Die Stellglieder 2.51, 2.52 können auch als Führungsstangen bezeichnet werden.

Der Elektromotor 4 überträgt sein Antriebsmoment über das Getriebe 6 und die Freilaufkupplung 8 auf das Antriebsritzel 26. Mittels des Elektromotors 4 können die beiden Gehäuseteile 2.2, 2.3 nach außen oder nach innen verfahren werden. Damit wird eine mechanische Einrichtung, die über die Gelenkzapfen 2.21, 2.22, 2.31 und 2.32 mit dem Stellmechanismus 2 verbunden ist, von einer Bremsstellung in eine Lüftstellung oder umgekehrt bewegt.

Die in Fig. 4 gezeigte Halteeinrichtung 12 weist ein drehfest mit der Antriebswelle 10 verbundenes Motorritzel oder Sperrklinkenrad 12.1 auf. Dem Sperrklinkenrad 12.1 ist eine federbelastete Rastklinke 12.2 zugeordnet. Die Rastklinke 12.2 ist schwenkbar gelagert und wird über einen Stößel 12.3 durch einen Elektromagneten 12.4, zum Beispiel eine Magnetspule, bewegt, wobei der Stößel 12.3 in Kombination mit der Rastklinke 12.2 das Sperrklinkenrad 12.1 im Strom führenden, d.h. eingeschalteten Zustand des Elektromagneten 12.4 sperrt. Dabei wird die Rastklinke 12.2 gegen die Kraft eines Federelements 12.5 betätigt. Im stromlosen Zustand des Elektromagneten 12.4 entfällt die Krafteinwirkung des Stößels 12.3 auf die Rastklinke 12.2, so dass die Rastklinke 12.2 aufgrund der Einwirkung des Federelements 12.5 in eine das Ritzel 12.1 freigebende Stellung bewegt wird. Das Federelement 12.5 ist beispielsweise als Federpatrone ausgestaltet.

Die Fig. 5a und 5b zeigen jeweils eine Schnittansicht des Hilfsantriebs 14, und zwar zum einen im Motorbetrieb (Fig. 5a) und zum anderen im Handbetrieb mit eingestecktem Werkzeug 15 in Form einer Handkurbel.

Der Hilfsantrieb 14 kann auch als Handlüft- oder Handstelleinrichtung bezeichnet werden. Er weist eine axial verschiebbar gelagerte Gewindeschnecke (Verschiebeschnecke) 14.1 auf, die mit einer Rückstellfeder 14.2 versehen ist. Die Gewindeschnecke 14.1 kann gegen die Kraft der Rückstellfeder 14.2 in einer Bohrung 14.5 verschoben werden. Die Bohrung 14.5 besitzt axiale Abschnitten 14.51, 14.52, 14.53 mit unterschiedlichem Innendurchmesser. Ebenso weist die Gewindeschnecke 14.1 axiale Abschnitte mit unterschiedlichem Außendurchmesser auf. Der den kleinsten Innendurchmesser aufweisende Abschnitt 14.51 der Bohrung ist von einem schaftförmigen Abschnitt 14.11 der Gewindeschnecke 14.1 durchdrungen, wobei der schaftförmige Abschnitt 14.11 axial verschiebbar in dem Abschnitt 14.51 der Bohrung geführt ist. An den schaftförmigen Abschnitt 14.11 schließt sich ein Gewindeabschnitt 14.12 an, der durch Verschieben der Gewindeschnecke 14.1 gegen die Kraft der Rückstellfeder 14.2 mit einem Motorritzel 14.3 in Eingriff gelangt. Die als Schraubenfeder ausgeführte Rückstellfeder 14.2 umgibt den schaftförmigen Abschnitt 14.11 und ist an einem Absatz 14.54 der Bohrung sowie an einem Absatz 14.13 der Gewindeschnecke 14.1 abgestützt. Der durch den Abschnitt 14.51 der Bohrung hindurchgeführte Abschnitt 14.11 der Gewindeschnecke 14.1 ist an seinem Ende mit einem Außengewinde und einer darauf montierten Mutter 14.6 versehen. Die Mutter 14.6 begrenzt als Anschlag die durch die Rückstellfeder 14.2 herbeigeführte Rückstellbewegung der Gewindeschnecke 14.1 in die Bohrung 14.5. Des Weiteren weist die Gewindeschnecke 14.1 einen durchmessererweiterten Kopf 14.13 auf, dessen Außendurchmesser größer als der Außendurchmesser des Gewindeabschnitts 14.12 ist. Der Kopf 14.13 der Gewindeschnecke 14.1 ist dem den größten Innendurchmesser aufweisenden Abschnitt 14.53 der Bohrung 14.5 axial geführt. Ferner weist die Gewindeschnecke 14.1 bzw. der Kopf 14.13 einen mit dem Werkzeug 15 form- oder kraftschlüssig greifbaren Abschnitt 14.4 auf, der beispielsweise als Sechskant-Ausnehmung ausgeführt ist.

Bei entferntem Werkzeug 15 wird die Gewindeschnecke 14.1 im Motorbetrieb durch die Ritzeldrehung und die Rückstellfeder ausgerückt, so dass die Gewindeschnecke 14.1 dann nicht mehr im Eingriff mit einem drehfest mit der Antriebswelle 10 verbundenen Motorritzel 14.3 steht und der Betrieb des Elektromotors 4 nicht behindert wird. Ein solcher Zustand ist in Fig. 5a dargestellt.

Bei ausgeschaltetem Elektromotor 4 oder Stromausfall kann das Werkzeug 15, sofern erforderlich, in den Abschnitt 14.4 eingesteckt werden und die Rückstellkraft der Rückstellfeder 14.2 manuell mithilfe des Werkzeugs 15 überwunden werden, wobei die Gewindeschnecke 14.1 durch Drehung des Werkzeugs 15 in Eingriff mit dem Motorritzel 14.3 gelangt. Sodann kann der Stellmechanismus 2 manuell betätigt werden, indem das Motorritzel 14.3 und damit die Antriebswelle (Motorwelle) 10 mithilfe des Werkzeugs (Kurbel) 15 gedreht werden, so dass die zu betätigende mechanische Bremseinrichtung aus der Bremsstellung in die Lüftstellung bewegbar ist. Ein solcher Zustand ist in Fig. 5b dargestellt.

Bei einem Start des Elektromotors 4 gelangt der Hilfsantrieb 14 aufgrund der vorgegebenen Drehrichtung der Motorwelle 10 und der Kraft der Rückstellfeder 14.2 automatisch außer Eingriff mit dem Motorritzel 14.3, sodass der Hilfsantrieb 14 den Betrieb der erfindungsgemäßen Vorrichtung bei eingeschaltetem Elektromotors 4 nicht behindert.

Fig. 6 zeigt ein erstes Ausführungsbeispiel der erfindungsgemäßen Vorrichtung mit einer als Scheibenbremse 28 ausgeführten Bremseinrichtung in einer Draufsicht. Erfindungsgemäß ist die Bremseinrichtung (Scheibenbremse 28) mit einer Spannvorrichtung 16 versehen.

Die Scheibenbremse 28 weist an mehrgliedrigen Bremszangenarmen 28.1, 28.2 angeordnete Bremsbacken 24 mit Bremsbelägen 30 auf, die zum Abbremsen einer Transport- oder Fördervorrichtung an eine mit einer Welle, Antriebstrommel oder dergleichen drehfest verbundene Bremsscheibe gepresst werden. Über an den Gelenkzapfen 2.21, 2.22, 2.31 und 2.32 angelenkten Kraftübertragungsgliedern oder Zugleisten 22 wird die Bewegung des Stellmechanismus 2 auf die Scheibenbremse 28 übertragen. Hierzu sind die mehrgliedrigen Bremszangenarme 28.1, 28.2 gelenkig mit den Zugleisten 22 verbunden. Die zweiarmigen Glieder 28.11, 28.12 und 28.21, 28.22 der Bremszangenarme 28.1, 28.2 sind an einem Lagerteil 28.3 der Scheibenbremse 28 schwenkbar gelagert, derart dass ein Aufeinanderzubewegen der beiden Stellkörper oder Gehäuseteile 2.2, 2.3 mittels des Stellmechanismus 2 zu einem Spreizender an den Zugleisten 22 angelenkten Abschnitte der beiden Bremszangenarme 28.1, 28.2 führt, wodurch daran angelenkte Bremszangenglieder und schließlich die Bremsbacken 24 in eine Bremsstellung gebracht werden.

Durch Auseinanderbewegen der Gehäuseteile 2.2, 2.3 werden die zweiarmigen Glieder 28.11, 28.12 und 28.21, 28.22 der Bremszangenarme 28.1, 28.2 und die daran gelenkig angebrachten Bremsbacken 24 in eine Lüftstellung bewegt. Dabei ist die Spannvorrichtung 16 mit den Bremszangenarmen 28.1 und 28.2 gekoppelt, so dass die Spannvorrichtung 16 durch Bewegen der Bremszangenarme 28.1, 28.2 in die Lüftstellung gespannt wird. Die Bremsbacken 24 werden mittels des Elektromotors 4 gegen die Kraft der Spannvorrichtung 16 in der Lüftstellung gehalten. Die Spannvorrichtung 16 ist in dem Ausführungsbeispiel gemäß Fig. 6 aus federelastischen Rückstellelementen 16.1 in Form von Druckfedern ausgeführt. Entfällt die Krafteinwirkung mittels des Elektromotors 4 auf die Spannvorrichtung 16, beispielsweise durch einen Stromausfall, so bewirkt die Federkraft der Spannvorrichtung 16, dass die Bremszangenarme 28.1, 28.2 und damit auch der mit den Bremszangenarmen 28.1, 28.2 gekoppelte Stellmechanismus 2 in die Bremsstellung zurückschnellen und die Bremsbeläge 30 gegen eine Bremsscheibe oder dergleichen gepresst werden.

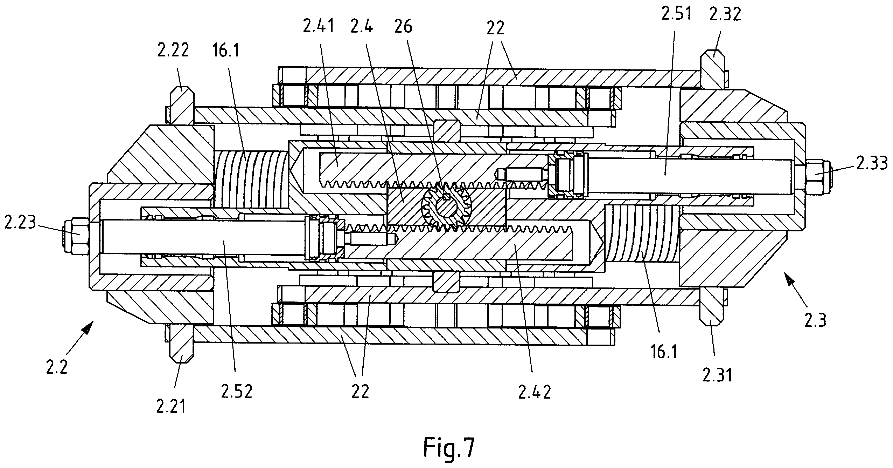

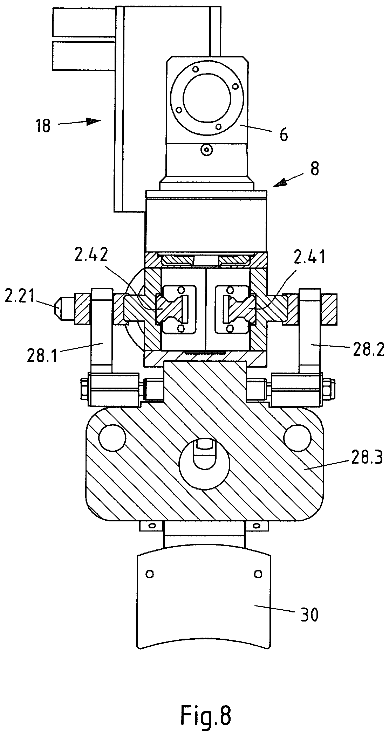

Fig. 7 zeigt eine Schnittansicht der Vorrichtung aus Fig. 6 entlang der Schnittlinie VII-VII, während Fig. 8 eine Schnittansicht derselben Vorrichtung entlang der Schnittlinie VIII-VIII zeigt. Im Unterschied zu dem in Fig. 1 dargestellten Ausführungsbeispiel sind an den Gelenkzapfen 2.21, 2.22, 2.31 und 2.32 Zugleisten 22 angeordnet, die der Kraftübertragung vom Stellmechanismus 2 auf die Scheibenbremse 28 dienen. Auch sind die federelastischen Rückstellelemente 16.1 der Spannvorrichtung 16 zu erkennen.

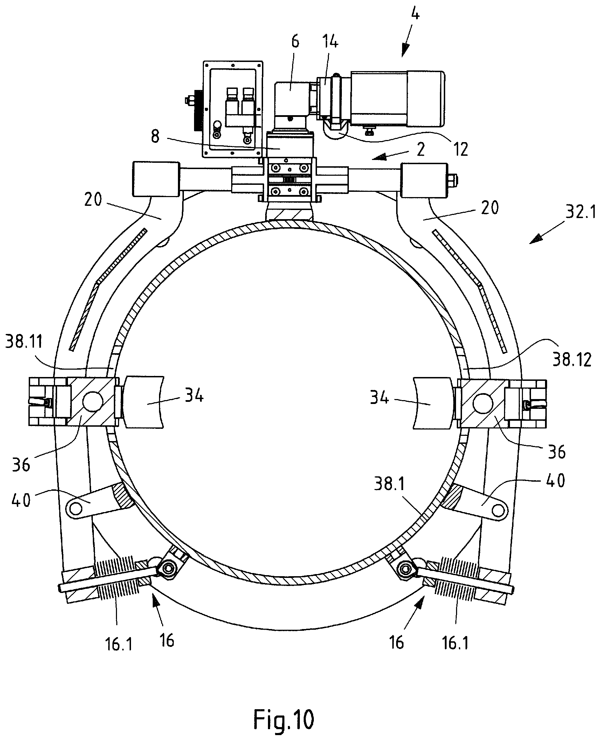

Die Figuren 9 und 10 zeigen ein weiteres Ausführungsbeispiel der erfindungsgemäßen Vorrichtung mit einer Gestängebremse 32.1. Im Unterschied zu dem Ausführungsbeispiel gemäß den Figuren 6 bis 8 sind an den Gelenkzapfen 2.21, 2.22 und 2.31, 2.32 Gestänge 20 angebunden, die geeignet sind, Bremszangen 34 über Betätigungselemente 36 zu betätigen. Die beweglichen Teile der Gestängebremse sind dabei an einer mit dem Grundgehäuse 2.1 des Stellmechanismus 2 verbundenen Haube 38.1 befestigt. Die Haube 38.1 weist vorzugsweise eine im Wesentlichen geschlossene Kreisform auf, wobei die Gestänge 20 über Gelenkelemente 40 mit der Haube 38.1 verbunden sind. Weiter sind die Betätigungselemente 36 mit der Haube 38.1 verbunden, wobei die in den Betätigungselementen 36 gelagerten Bremszangen 34 diametral gegenüberliegende Durchgangsöffnungen 38.11, 38.12 der Haube 38.1 durchgreifen. Über eine Bewegung des Stellmechanismus 2 werden die Gestänge 20 verschwenkt. Die Schwenkbewegung der Gestänge 20 wird über die Betätigungselemente 36 an die Bremszangen 34 übertragen, wodurch die Gestängebremse 32.1 in eine Brems- bzw. Lüftstellung bewegt werden kann.

Wenn die Gestänge 20 mit den Bremszangen 34 in eine Lüftstellung bewegt werden, wird die an den Gestängen 20 angeordnete Spannvorrichtung 16 gespannt. Die Spannvorrichtung 16 ist in diesem Ausführungsbeispiel aus federelastischen Rückstellelementen 16.1 in Form von Federpaketen oder Druckfedern (Bremsfedern) gebildet, die vorzugsweise an den dem Stellmechanismus 2 abgewandten Enden der Gestänge 20 angeordnet und mit der Haube 38.1 gelenkig verbunden sind. Die Rückstellelemente 16.1 der Spannvorrichtung 16 üben in einer Lüftstellung der Gestängebremse 32.1 eine Federkraft auf die Gestänge 20 aus, so dass bei einem Wegfall der von dem Elektromotor 4 ausgeübten Kraft auf die Gestänge 20, die Gestänge 20 und die Bremszangen 34 in eine Bremsstellung bewegt werden bzw. zurückschnellen.

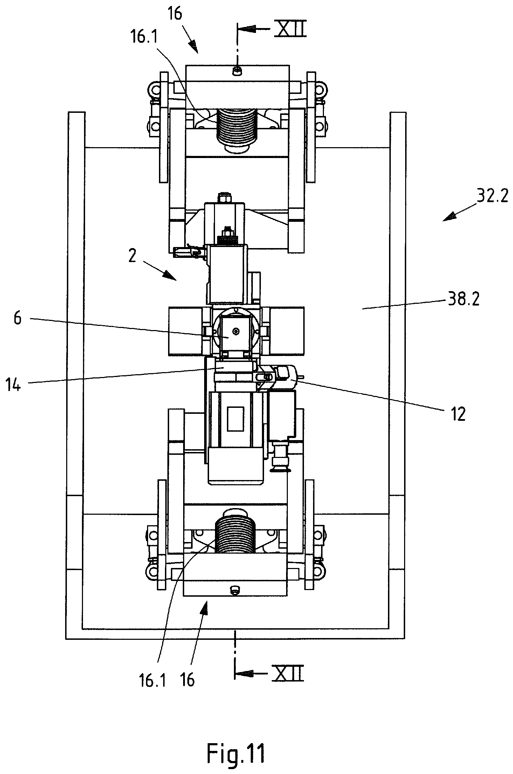

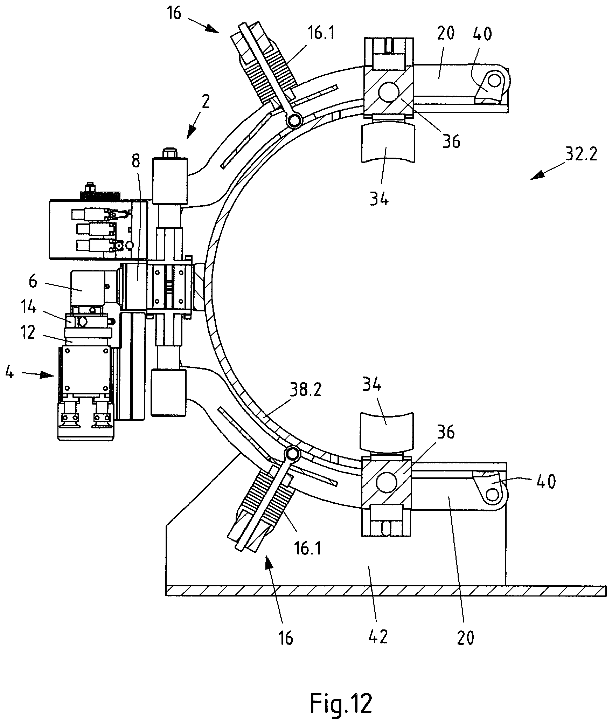

In den Fig. 11 und 12 ist ein weiteres Ausführungsbeispiel der erfindungsgemäßen Vorrichtung mit einer Gestängebremse 32.2 dargestellt. Im Unterschied zu dem Ausführungsbeispiel gemäß den Figuren 9 und 10 ist die Haube 38.2 im Wesentlichen U-förmig ausgebildet. Man kann die Ausführung gemäß den Figuren 11 und 12 auch als offene Haubenkonstruktion bezeichnen. Die Spannvorrichtung 16 ist in diesem Beispiel zwischen den Betätigungselementen 36 und dem Stellmechanismus 2 angeordnet und mit der Haube 38.2 und den Gestängen 20 verbunden, wobei die Anbindung der federelastischen Rückstellelemente 16.1 an die Haube 38.2 in Form eines Gelenks ausgeführt ist. Die Haube 38.2 ist auf einer Grundplatte 42 gelagert. Die Funktionsweise einer solchen Gestängebremse 32.2 entspricht im Wesentlichen der Funktionsweise der in den Fig. 9 und 10 dargestellten Gestängebremse 32.1. Aufgrund der offenen Haubenkonstruktion kann eine solche Gestängebremse 32.2 einfacher als die Gestängebremse 32.1 mit geschlossener Haubenkonstruktion gemäß den Fig. 9 und 10 an einer Welle oder Antriebstrommel einer Transport- oder Fördervorrichtung montiert sowie zu Wartungs- und Instandhaltungszwecken demontiert werden.

In den in den Figuren 6 bis 12 dargestellten Ausführungsbeispielen der erfindungsgemäßen Vorrichtung entsprechen die Komponenten 2, 4, 6, 8, 12 und 14 den Komponenten 2, 4, 6, 8, 12 und 14, die oben mit Bezug auf die Figuren 1 bis 5b beschrieben sind.

Die Ausführung der Erfindung ist nicht auf die in der Zeichnung dargestellten Ausführungsbeispiele beschränkt. Vielmehr sind zahlreiche Varianten denkbar, die auch bei von den gezeigten Beispielen abweichender Gestaltung von der in den beigefügten Ansprüchen angegebenen Erfindung Gebrauch machen. So können beispielsweise die Rückstellelemente 16.1 der Spannvorrichtung 16 auch als Luftfedern ausgeführt werden.

## Patentansprüche

1. Vorrichtung zum Betätigen einer mechanischen Bremseinrichtung, mit einem aus einer Bremsstellung in eine Lüftstellung und umgekehrt bewegbaren Stellmechanismus (2), einem Elektromotor (4) zum Bewegen des Stellmechanismus (2) aus der Bremsstellung in die Lüftstellung, und mit einer mit dem Stellmechanismus (2) verbundenen Spannvorrichtung (16), die beim Bewegen des Stellmechanismus (2) aus der Bremsstellung in die Lüftstellung gespannt wird, wobei der Stellmechanismus (2) mit einem Zahnstangentrieb (2.4) versehen ist, der mit einem durch den Elektromotor (4) angetriebenen Antriebsritzel (26) kämmt, und wobei der Elektromotor (4) sein Drehmoment über eine als Freilaufkupplung (8) ausgeführte Kupplung auf das Antriebsritzel (26) überträgt, **dadurch gekennzeichnet, dass** der Zahnstangentrieb (2.4) gegensinnig wirkende Zahnstangen (2.41, 2.42) aufweist, die mit Kolben und/oder Gestängen (2.51, 2.52) des Stellmechanismus (2) gekoppelt sind.

2. Vorrichtung nach Anspruch 1, **dadurch gekennzeichnet, dass** die Spannvorrichtung (16) aus federelastischen Rückstellelementen (16.1), vorzugsweise aus Druckfedern oder Luftfedern gebildet ist.

3. Vorrichtung nach Anspruch 1 oder 2, **dadurch gekennzeichnet, dass** die gegensinnig wirkenden Zahnstangen (2.41, 2.42) mit gelenkig gelagerten Gestängen (20) und/oder Hebeln derart gekoppelt sind, dass eine axiale gegensinnige Bewegung der Zahnstangen (2.41, 2.42) mittels der gelenkig gelagerten Gestänge (20) und/oder Hebel krafterhöhend auf die Spannvorrichtung (16) zum Spannen der Rückstellelemente (16.1) übertragbar ist.

4. Vorrichtung nach einem der Ansprüche 1 bis 3, **dadurch gekennzeichnet, dass** eine vom Elektromotor (4) angetriebene Antriebswelle (10) mit einer Halteeinrichtung (12) versehen ist, mittels welcher eine Bewegung des Stellmechanismus (2) aus der Lüftstellung in die Bremsstellung sperrbar ist.

5. Vorrichtung nach Anspruch 4, **dadurch gekennzeichnet, dass** die Halteeinrichtung (12) ein mit der Antriebswelle (10) drehfest verbundenes Ritzel (12.1), eine dem Ritzel (12.1) zugeordnete federbelastete Rastklinke (12.2) und einen die Rastklinke (12.2) gegen die Kraft eines Federelements (12.5) betätigenden Elektromagneten (12.4) aufweist, wobei die Rastklinke (12.2) im stromlosen Zustand des Elektromagneten (12.4) durch das Federelement (12.5) in eine das Ritzel (12.1) entsperrende Stellung bewegt wird.

6. Vorrichtung nach einem der Ansprüche 1 bis 5, **dadurch gekennzeichnet, dass** die oder eine vom Elektromotor (4) angetriebene Antriebswelle (10) mit einem manuell betätigbaren Hilfsantrieb (14) versehen ist, mittels welchem der Stellmechanismus (2) bei stromlosen Elektromotor (4) manuell aus der Bremsstellung in die Lüftstellung bewegbar ist.

7. Vorrichtung nach Anspruch 6, **dadurch gekennzeichnet, dass** der Hilfsantrieb (14) eine axial verschiebbar gelagerte Gewindeschnecke (14.1) aufweist, die mit einer Rückstellfeder (14.2) versehen ist und an einem Ende einen mit einem Werkzeug (15) form- und/oder kraftschlüssig greifbaren Abschnitt (14.4) aufweist, wobei die Gewindeschnecke (14.1) in Eingriff mit einem mit der Antriebswelle (10) drehfest verbundenen Motorritzel (14.3) bringbar ist und bei einem Start des Elektromotors (4) automatisch außer Eingriff mit dem Motorritzel (14.3) gelangt.

8. Vorrichtung nach einem der Ansprüche 1 bis 7, **dadurch gekennzeichnet, dass** diese Bestandteil einer oder der Bremseinrichtung ist.

9. Vorrichtung nach einem der Ansprüche 1 bis 8, **dadurch gekennzeichnet, dass** der Elektromotor (4) über ein Winkelgetriebe (6), vorzugsweise ein Winkelplanetengetriebe, mit dem mit den Zahnstangen (2.41, 2.42) kämmenden Antriebsritzel (26) verbunden ist.

10. Vorrichtung nach Anspruch 9, **dadurch gekennzeichnet, dass** die Freilaufkupplung (8) zwischen dem Winkelgetriebe (6) und dem Antriebsritzel (26) angeordnet ist.

## Claims

1. Device for actuating a mechanical brake device with an adjusting mechanism (2) which can be moved from a braking position into a released position and vice versa, an electric motor (4) for moving the adjusting mechanism (2) from the braking position into the released position and with a clamping device (16) connected to the adjusting mechanism (2), which is clamped when the adjusting mechanism (2) is moved from the braking position to the released position, wherein the adjusting mechanism (2) is provided with a rack-and-pinion drive(2.4), which meshes with a drive pinion (26) driven by the electric motor (4), and wherein the electric motor (4) transmits its torque to the drive pinion (26) via a clutch designed as a freewheel clutch (8), **characterised in that** the rack-and-pinion drive (2.4) has racks (2.41, 2.42) working in opposite directions coupled to pistons and/or rods (2.51, 2.52)of the adjusting mechanism.

2. Device according to claim 1, **characterised in that** the clamping device (16) is formed by spring-elastic restoring elements (16.1), preferably by compression springs or air springs.

3. Device according to claim 1 or 2, **characterised in that** racks (2.41, 2.42) working in opposite directions are coupled with rods (20) and/or levers mounted in an articulated manner such that an axially oppositely directed movement of the racks (2.41, 2.42) by means of the rods (20) and/or levers mounted in an articulated manner is transferrable with an increase in force to the clamping device (16) for clamping the restoring elements (16.1).

4. Device according to any one of claims 1 to 3, **characterised in that** a drive shaft (10) driven by the electric motor (4) is provided with a retention device (12), by means of which a movement of the adjusting mechanism (2) from the released position into the braking position can be locked.

5. Device according to claim 4, **characterised in that** the retention device (12) has a pinion (12.1) non-rotatably connected to the drive shaft (10), a spring-loaded latching pawl (12.2) associated with the pinion (12.1) and an electromagnet (12.4) operating the latching pawl (12.2) against the force of a spring element (12.5), wherein the latching pawl (12.2) in the unpowered state of the electromagnet (12.4) is moved by the spring element (12.5) into a position unlocking the pinion (12.1).

6. Device according to any one of claims 1 to 5, **characterised in that** the or a drive shaft (10) driven by the electric motor (10) is provided with a manually operable auxiliary drive (14), by means of which the adjusting mechanism (2) when the electric motor (4) is unpowered can be moved manually from the braking position into released position.

7. Device according to claim 6, **characterised in that** the auxiliary drive (14) has a gear screw (14.1) mounted in an axially displaceable manner, provided with a return spring (14.2) and having on one end a portion (14.4) able to engage positively and/or non-positively with a tool (15), wherein the gear screw (14.1) can be brought into engagement with a motor pinion (14.3) non-rotatably connected to the drive shaft (10) and when the electric motor (4) starts automatically disengages from the motor pinion (14.3).

8. Device according to any one of claims 1 to 7, **characterised in that** this device is a component of a braking device or the braking device.

9. Device according to any one of claims 1 to 8, **characterised in that** the electric motor (4) is connected via an angular gear (6), preferably an angular planetary gear, with the drive pinion (26) meshing with the racks (2.41, 2.42).

10. Device according to claim 9, **characterised in that** the freewheel clutch (8) is arranged between the angular gear (6) and the drive pinion (26).

## Revendications

1. Dispositif servant à actionner un dispositif de freinage mécanique, ledit dispositif d'actionnement comprenant un mécanisme de réglage (2) pouvant être déplacé et permettant de passer d'une position de freinage à une position de déblocage et inversement, comprenant un moteur électrique (4) servant à déplacer le mécanisme de réglage (2) passant de la position de freinage à la position de déblocage, et comprenant un dispositif de serrage (16) relié au mécanisme de réglage (2), lequel dispositif de serrage est serré lors du déplacement du mécanisme de réglage (2) passant de la position de freinage à la position de déblocage, où le mécanisme de réglage (2) est doté d'un mécanisme d'engrenage à crémaillères (2.4) qui s'engrène avec un pignon d'entraînement (26) entraîné par le moteur électrique (4), et où le moteur électrique (4) transmet son moment de rotation au pignon d'entraînement (26), par un accouplement se produisant comme un accouplement à roue libre (8), **caractérisé en ce que** le mécanisme d'engrenage à crémaillères (2.4) présente des crémaillères (2.41, 2.42) fonctionnant en sens inverse, lesquelles crémaillères sont couplées à des pistons et/ou à des tringles (2.51, 2.52) du mécanisme de réglage (2).

2. Dispositif selon la revendication 1, **caractérisé en ce que** le dispositif de serrage (16) est formé en se composant d'éléments de rappel (16.1) élastiques comme un ressort, se composant de préférence de ressorts de pression ou de ressorts pneumatiques.

3. Dispositif selon la revendication 1 ou 2, **caractérisé en ce que** les crémaillères (2.41, 2.42) fonctionnant en sens inverse sont couplées à des tringles (20) montées de manière articulée et/ou couplées à des leviers, de manière telle qu'un mouvement axial des crémaillères (2.41, 2.42) se produisant en sens inverse puisse être transmis au moyen des tringles (20) montées de manière articulée et/ou au moyen des leviers augmentant la force exercée sur le dispositif de serrage (16) servant au serrage des éléments de rappel (16.1).

4. Dispositif selon l'une quelconque des revendications 1 à 3, **caractérisé en ce qu'**un arbre d'entraînement (10) entraîné par le moteur électrique (4) est doté d'un dispositif d'arrêt (12) à l'aide duquel peut être bloqué un mouvement du mécanisme de réglage (2) passant de la position de déblocage à la position de freinage.

5. Dispositif selon la revendication 4, **caractérisé en ce que** le dispositif d'arrêt (12) présente un pignon (12.1) relié solidairement en rotation à l'arbre d'entraînement (10), présente un cliquet d'arrêt (12.2) commandé par ressort et associé au pignon (12.1) et présente un électroaimant (12.4) faisant fonctionner le cliquet d'arrêt (12.2) contre la force d'un élément à ressort (12.5), où le cliquet d'arrêt (12.2), quand l'électroaimant (12.4) n'est pas alimenté en courant, est déplacé, par l'élément à ressort (12.5), dans une position débloquant le pignon (12.1).

6. Dispositif selon l'une quelconque des revendications 1 à 5, **caractérisé en ce que** l'arbre d'entraînement (10), ou un arbre d'entraînement, entraîné par le moteur électrique (4) est doté d'un entraînement auxiliaire (14) pouvant être actionné manuellement, entraînement auxiliaire à l'aide duquel, quand le moteur électrique (4) n'est pas alimenté en courant, le mécanisme de réglage (2) peut être déplacé manuellement pour passer de la position de freinage à la position de déblocage.

7. Dispositif selon la revendication 6, **caractérisé en ce que** l'entraînement auxiliaire (14) présente un filet hélicoïdal (14.1) montée en pouvant être déplacée axialement, lequel filet hélicoïdal est dotée d'un ressort de rappel (14.2) et, au niveau d'une extrémité, présente une partie (14.4) qui, par complémentarité de forme et/ou par action de force, peut être saisie avec un outil (15), où le filet hélicoïdal (14.1) peut venir en prise avec un pignon de moteur (14.3) relié solidairement en rotation à l'arbre d'entraînement (10) et, lors d'un démarrage du moteur électrique (4), ledit filet hélicoïdal se place automatiquement en n'étant pas en prise avec le pignon de moteur (14.3).

8. Dispositif selon l'une quelconque des revendications 1 à 7, **caractérisé en ce que** ledit dispositif fait partie d'un ou du dispositif de freinage.

9. Dispositif selon l'une quelconque des revendications 1 à 8, **caractérisé en ce que** le moteur électrique (4) est relié, par un engrenage angulaire (6), de préférence un engrenage planétaire angulaire, au pignon d'entraînement (26) s'engrenant avec les crémaillères (2.41, 2.42).

10. Dispositif selon la revendication 9, **caractérisé en ce que** l'accouplement à roue libre (8) est disposé entre l'engrenage angulaire (6) et le pignon d'entraînement (26).
